# EUROPÄISCHE PATENTSCHRIFT

(11) **EP 4 228 846 B1**
(45) Veröffentlichungstag und Bekanntmachung des Hinweises auf die Patenterteilung: **18.02.2026**
(21) Anmeldenummer: 21793854.7
(22) Anmeldetag: 06.10.2021
(51) Int. Cl.: B23K 9/04, B23K 37/00, B23K 9/32, B22F 3/10

(54) **SCHWEISSEINRICHTUNG MIT DÜSENVORRICHTUNG ZUM KÜHLEN EINES WERKSTÜCKS WÄHREND DES SCHWEISSVORGANGS**
WELDING DEVICE WITH NOZZLE DEVICE FOR COOLING A WORKPIECE DURING THE WELDING PROCESS
DISPOSITIF DE SOUDAGE POURVU DE DISPOSITIF À BUSES PERMETTANT DE REFROIDIR UNE PIÈCE LORS DU PROCESSUS DE SOUDAGE

(30) Priorität: 13.10.2020 EP 20020471
(43) Veröffentlichungstag der Anmeldung: 23.08.2023
(73) Patentinhaber: Linde GmbH, 82049 Pullach (DE)
(72) Erfinder: SIEWERT, Erwan, 82049 Pullach (DE)
(74) Vertreter: Lu, Jing
(86) Internationale Anmeldenummer: PCT/EP2021/025392
(87) Internationale Veröffentlichungsnummer: WO 2022/078625

(56) Entgegenhaltungen:
- EP-A1- 3 646 967
- WO-A1-2017/059842
- WO-A2-2017/129678
- WO-A2-2019/002563
- GB-A- 2 532 024

## Beschreibung

Die Erfindung betrifft eine Schweißeinrichtung, insbesondere für einen Lichtbogenschweißprozess, z.B. in Form von WAAM (Wire Arc Additive Manufacturing). Eine gattungsgemäße Schweißeinrichtung ist der GB2532024 zu entnehmen.

Beim Einsatz von Lichtbogentechnik für das Fügen, Auftragsschweißen und generative Fügen (auch Wire Arc Additive Manufacturing genannt) wird durch das Auf- oder Anschmelzen des Grund- und Zusatzwerkstoffes Wärme in das Bauteil oder die Struktur eingebracht. Insbesondere, wenn mehrere Lagen Zusatzwerkstoff eingebracht werden kommt es zu einer Akkumulation der Wärmeeinbringung.

Beim WAAM (Wire Arc Additive Manufacturing) wird mit etablierten MSG Verfahren schichtweise ein metallischer Werkstoff aufgetragen, so dass eine 3-D Struktur bzw. ein entsprechendes Werkstück entsteht. Problematisch ist, dass sich das Werkstück über die Schweißzeit aufheizt, sodass es zu einer Veränderung der elektrischen Bedingungen, zu einer Veränderung der thermischen Bedingungen, zu einer Veränderung des Lagenaufbaus und zu Verformungen sowie zum Auftreten von Anlauffarben kommt.

Zudem kommt es zu einer unkontrollierten Veränderung der mechanisch technologischen Werkstoffeigenschaften, da durch jede weitere Lage die vorherigen Lagen eine thermische Beeinflussung erfahren.

Momentan wird versucht, die oben beschriebenen Probleme durch Pausen, in denen das Werkstück abkühlt, in den Griff zu bekommen. Die hohe Abschmelzleistung der MSG Verfahren wird durch den Zwang dieser Abkühlpausen relativiert.

Grundsätzlich besteht die Möglichkeit, WAAM Strukturen mit Gasströmungen zu kühlen, so dass metallurgische Eigenschaften verbessert werden können und keine bzw. weniger Abkühlpausen eingelegt werden müssen. Solche Lösungen funktionieren jedoch nur bei sehr einfachen Strukturen wie z.B. beim Aufbau eines Rohres (Kreisbahn), und hier auch nur, wenn sich die aufzubauende Struktur um die eigene Achse dreht und nicht der Schweißbrenner bewegt wird. Die Kühldüsen können hierbei immer in einem konstanten Abstand zum Schweißbrenner positioniert werden. Die Kühlposition muss nicht geändert werden.

Sobald sich das Rohr nicht mehr um die eigene Achse dreht (Drehtisch), sich der Brenner bewegt oder aber komplexere Geometrien geschweißt werden, kommt es zu einer ständigen Veränderung der zu kühlenden Position.

Hiervon ausgehend, liegt der vorliegenden Erfindung die Aufgabe zugrunde, eine Schweißvorrichtung bereitzustellen, die im Hinblick auf die oben genannte Problematik verbessert ist.

Diese Aufgabe wird durch eine Schweißeinrichtung mit den Merkmalen des Anspruchs 1 gelöst. Vorteilhafte Ausgestaltungen der Erfindung sind in den entsprechenden Unteransprüchen angegeben und werden nachfolgend beschrieben.

Die Erfindung erlaubt damit mit Vorteil eine Kühlung des Werkstücks in der Nähe der Energieeinbringung um einer Überhitzung entgegenzuwirken, und zwar auch wenn sich die Bewegungsrichtung und/oder Orientierung des Schweißbrenners beim Schweißen ändert, da mehrere Kühldüsen zur Verfügung stehen, die mit einem Kühlmedium beaufschlagt werden können.

Erfindungsgemäß sind die Kühldüsen der Düsenvorrichtung in einer Umfangsrichtung des Schweißbrenners nebeneinander angeordnet, vorzugsweise äquidistant, so dass das Kühldüsenarray ringförmig um den Schweißbrenner herum verläuft.

Dies ist besonders vorteilhaft bei Applikationen, bei denen eine gute Zugänglichkeit notwendig ist. Durch die ringförmige Anordnung können die Kühldüsen auf kleinstem Bauraum um den Schweißbrenner herum angeordnet werden.

Weiterhin ist gemäß der Erfindung vorgesehen, dass das Kühldüsenarray mehreren Reihen von Kühldüsen aufweist, wobei das Kühldüsenarray zumindest eine radiale Reihe zum Mittelpunkt, bevorzugt mehrere radiale Reihle, von Kühldüsen aufweist und auf der Reihe mindestens zwei Düsen angeordnet sind, wobei die Düsen mit unterschiedlichen radialen Abständen zum Mittelpunkt angeordnet sind, wobei insbesondere das Kühldüsenarray ein zweidimensionales Feld bzw. Array aus Kühldüsen darstellt, wobei insbesondere die einzelnen Reihen linear verlaufen können oder gekrümmt, insbesondere ringförmig. Insbesondere für den Fall, dass mehrere Reihen an Kühldüsen eingesetzt werden bzw. vorhanden sind, können einzelne Kühldüsen auch nach innen, auf die noch heiße Schweißnaht oder Struktur gerichtet werden bzw. gerichtet sein.

Weiterhin ist gemäß einer Ausführungsform der Erfindung vorgesehen, dass mehrere Kühldüsen (insbesondere eine ausgewählte Reihe, mehrere ausgewählte Reihen oder alle Reihen) des Kühldüsenarrays mit einem einstellbaren Volumenstrom eines bestimmten Kühlmediums beaufschlagbar sind.

Gemäß einer weiteren Ausführungsform der Erfindung ist vorgesehen, dass zumindest eine Kühldüse der Düsenvorrichtung mit einem ersten Kühlmedium und zumindest eine weitere Kühldüse der Düsenvorrichtung mit einem zweiten Kühlmedium beaufschlagbar ist, wobei das zweite Kühlmedium sich in seiner Zusammensetzung vom ersten Kühlmedium unterscheidet.

Das Kühlmedium für die einzelnen Kühldüsen kann also verändert werden bzw. es können unterschiedliche Kühldüsen mit unterschiedlichen Kühlmedien beaufschlagt werden. So ist es z.B. möglich diejenigen Kühldüsen, welche sich nahe am Lichtbogen befinden, mit einem Kühlmedium, insbesondere mit einem Gas, insbesondere mit einem inerten Gas, zu beaufschlagen, wobei diejenigen Kühldüsen, welche weiter vom Lichtbogen entfernt sind mit einem aktiven Gas oder mit einem Gas mit vermehrten aktiven Anteilen oder aber auch mit einer Flüssigkeit, wie z. B. Wasser, beaufschlagt werden können. Hierdurch wird die Kühlwirkung stark gesteigert, ohne dass der Lichtbogen durch z. B. das Wasser beeinflusst wird.

Gemäß der Erfindung ist vorgesehen, dass das Kühldüsenarray um eine Rotationsachse rotierbar ist, so dass insbesondere die Kühldüsen um den Schweißbrenner herum bewegbar sind, so dass vorzugsweise ein von einer oder mehreren Kühldüsen ausgegebener Kühlmittelstrom auf eine noch heiße Oberfläche des mindestens einen Werkstücks gerichtet werden kann, auch wenn der Schweißbrenner schon seine Orientierung und/oder Bewegungsrichtung beim Schweißen verändert hat. Hierbei kann eine Rotationsachse dieser Rotation mit einer Längsachse des Schweißbrenners zusammenfallen, kann jedoch auch eine Neigung gegenüber dieser Längsachse aufweisen (z. B. wenn das Kühldüsenarray um eine weitere Kippachse kippbar ist, siehe unten).

Weiterhin ist gemäß einer Ausführungsform der Erfindung vorgesehen, dass die Schweißeinrichtung zum Rotieren des Kühldüsenarrays um die Rotationsachse zumindest einen Elektromotor oder einen pneumatischen Antrieb (oder ähnliche Bewegungseinheiten) aufweist.

Gemäß einer weiteren Ausführungsform der Erfindung ist vorgesehen, dass die Schweißeinrichtung dazu ausgebildet ist, einen Rotationswinkel des Kühldüsenarrays bezüglich der Rotationsachse anhand eines Temperatursignals einzustellen und/oder anhand einer automatischen Kalkulation basierend auf einem bekannten bzw. geplanten Bewegungsablauf des Schweißbrenners während des Schweißvorgangs.

Weiterhin ist gemäß einer Ausführungsform der Erfindung vorgesehen, dass das Kühldüsenarray um eine Kippachse, insbesondere um eine horizontale Kippachse kippbar ist. Dies erleichtert es, den Kühlmediumstrom immer auf die optimale Kühlposition zu richten (in der Regel in der Bewegungsrichtung des Schweißbrenners hinter dem Schweißprozess bzw. hinter dem momentanen Schweißbad, so dass die Kühlung bzw. Kühlposition dem Schweißbrenner nachfolgt).

Weiterhin ist gemäß einer Ausführungsform der Erfindung vorgesehen, dass die Schweißeinrichtung Temperatursensoren (besonders vorteilhaft optische Sensoren) aufweist, die dazu konfiguriert sind, eine Temperaturverteilung des mittels der Schweißeinrichtung erzeugten Werkstücks zu erfassen.

Gemäß einer weiteren Ausführungsform der Erfindung ist vorgesehen, dass die Schweißeinrichtung dazu ausgebildet ist, anhand der erfassten Temperaturverteilung bzw. Temperaturinformationen einen Volumenstrom eines durch die jeweilige Kühldüse ausgegebenen Kühlmediums zu steuern bzw. einzustellen, so dass insbesondere die Temperaturverteilung einer gewünschten Temperaturverteilung angenähert werden kann. Ferner kann auf diese Weise eine Wirkstelle der Kühlung auf der Oberfläche des mindestens einen Werkstücks anhand der Temperaturinformation gesteuert werden.

Die Düsenvorrichtung kann zum Steuern der Volumenströme z. B. stromauf der Kühldüsen vorgesehene Ventile aufweisen, die z. B. pneumatisch oder elektrisch ansteuerbar bzw. betätigbar sein können. Bei den Ventilen kann es sich z. B. um Proportionalventile handeln. Anstelle von Ventilen können auch verschiebbare Blenden verwendet werden.

Ferner kann anhand der bekannten Bahnkonturen berechnet werden (z. B. durch eine Simulation), an welchen Stellen des Werkstücks es zu einer Akkumulation von Wärme kommen wird. Dementsprechend kann an diesen Stellen gezielt stärker gekühlt werden als an Stellen, an denen kein Wärmestau berechnet wird.

Bevorzugt erfolgt die Kühlstrategie anhand einer Verzugsberechnung. Der jeweilige Durchfluss bzw. Volumenstrom eines Kühlmediums durch die jeweilige Kühldüse ist vorzugsweise variabel einstellbar, z. B. durch den Einsatz von Proportionalventilen.

Für eine Intensivierung der Kühlung ist die Schweißeinrichtung bzw. die Düsenvorrichtung dazu ausgebildet, mehrere Kühldüsen gleichzeitig zu öffnen bzw. über mehrere Kühldüsen gleichzeitig ein Kühlmedium auszugeben.

Die einzelnen Kühldüsen können z.B. über ein Gewinde an der Düsenvorrichtung montiert sein, so dass sie leicht austauschbar sind.

Weiterhin können die einzelnen Kühldüsen unterschiedliche Strömungscharakteristiken aufweisen und können somit an die jeweilige Applikation angepasst werden. Insbesondere kann die jeweilige Kühldüse z. B. ein rotationssymmetrisches Strömungsfeld erzeugen oder aber auch ein nicht rotationssymmetrisches Strömungsfeld. Hierzu kann die entsprechende Kühldüse z. B. als eine Schlitzdüse ausgebildet sein.

Weiterhin ist gemäß einer Ausführungsform der Erfindung vorgesehen, dass die Schweißeinrichtung dazu ausgebildet ist, eine Kühldüse, die sich näher am Lichtbogen befindet als eine weitere Kühldüse, mit einem geringeren Volumenstrom eines Kühlmediums zu beaufschlagen als die weitere Kühldüse, um das Risiko einer Wechselwirkung des Kühlmediums mit einem Prozessgas (z.B. Schutzgas) des Schweißvorganges zu senken. Bei dem Prozessgas kann es sich zum Beispiel um ein Schutzgas und/oder ein Fokussiergas handeln, das der Schweißbrenner ausgibt, um die Schweißstelle vor einer Oxidation zu schützen bzw. um den Lichtbogen zu steuern.

Weiterhin ist gemäß einer Ausführungsform der Erfindung vorgesehen, dass die Schweißeinrichtung dazu ausgebildet ist, als Kühlmedium eines oder mehrere der folgenden Medien über zumindest eine Kühldüse auszugeben: Argon, Helium, Stickstoff, Wasserstoff, Luft, Kohlendioxid, ein Gemisch einer Auswahl der vorgenannten Gase. Die Schweißvorrichtung kann dabei für jedes verwendete Kühlmedium einen Behälter aufweisen, der strömungstechnisch mit der Düsenvorrichtung verbunden ist bzw. verbindbar ist (z.B. über die oben genannten Ventile).

Ein weiterer Aspekt der vorliegenden Erfindung betrifft ein Verfahren zum Schweißen zumindest eines Werkstücks, wobei das Werkstück lagenweise mittels einer erfindungsgemäßen Schweißeinrichtung aufgebaut wird und mittels der Düsenvorrichtung gekühlt wird.

Die vorliegende Erfindung lässt sich besonders wirksam bei der additiven Fertigung (z.B: WAAM) einsetzen, da es hier zu einer starken Wärmeeinbringung in das Werkstück kommt.

Jedoch ist die erfindungsgemäße Lösung auch für herkömmliche Schweißprozesse oder das Auftragsschweißen einsetzbar.

Das erfindungsgemäße Prinzip ist besonders vorteilhaft in Applikationen verwendbar, in denen sich die Schweißrichtung öfter oder ständig ändert oder bei Applikationen, bei denen es zu einem vermehrten Verzug kommt. Die Erfindung kann bei Verfahren eingesetzt werden, die den Zusatzwerkstoff per Draht wie auch per Pulver zuführen. Die Erfindung ist grundsätzlich für alle Schweißprozesse geeignet (insbesondere für MSG, WIG, Plasmaschweißen, Laserschweißen, Sonderverfahren wie Hybridverfahren, Tandem, etc.)

Die Erfindung erlaubt mit Vorteil das Bewahren der mechanisch technologischen Werkstoffeigenschaften. Gleichzeitig wird eine Erhöhung der Produktionsgeschwindigkeiten erzielt, da keine Abkühlphasen zwischen den einzelnen Lagen notwendig sind (oft mehr als 50%).

Weiterhin ermöglicht die Erfindung eine Reduzierung des thermischen Verzuges auf ein Minimum. Der Lagenaufbau wird vorhersagbar und geringere Unebenheiten der herzustellenden 3D-Struktur sind erzielbar (sogenanntes near net shape wird verbessert). Weiterhin ermöglicht die Erfindung eine Reduzierung von Anlauffarben.

Im Folgenden sollen Ausführungsformen, weitere Merkmale und Vorteile der vorliegenden Erfindung anhand der Figuren erläutert werden. Es zeigen:
- Fig. 1: eine schematische Darstellung einer Ausführungsform einer erfindungsgemäßen Schweißeinrichtung in der Draufsicht bei einem Schweißvorgang, wobei der Schweißbrenner einen Richtungswechsel von 90° durchläuft,
- Fig. 2: eine schematische Darstellung einer Ausführungsform einer erfindungsgemäßen Schweißeinrichtung in der Draufsicht bei einem Schweißvorgang, wobei der Schweißbrenner einen Richtungswechsel von 180° durchläuft,
- Fig. 3: eine schematische Seitenansicht einer Ausführungsform einer erfindungsgemäßen Schweißeinrichtung mit einem Kühldüsenarray, das rotierbar am Schweißbrenner gelagert ist,
- Fig. 4: eine weitere schematische Seitenansicht der in der Figur 3 gezeigten Schweißeinrichtung, und
- Fig. 5: eine schematische Seitenansicht einer nicht- erfindungsgemäßen Schweißeinrichtung.

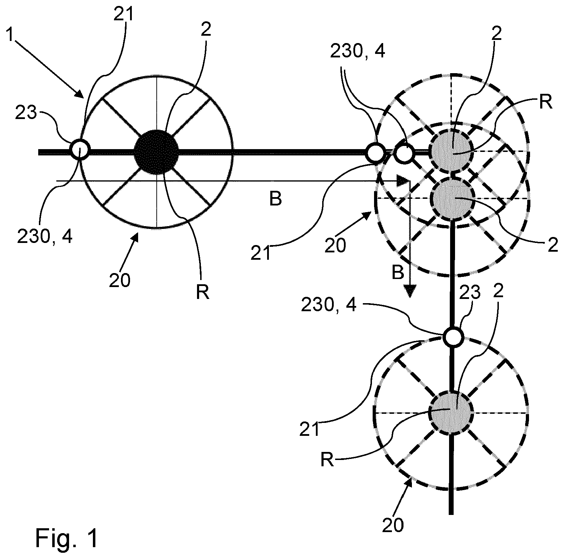

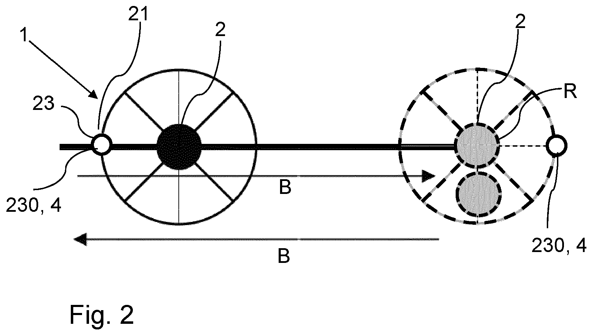

Die Figuren 1 und 2 zeigen eine schematische Draufsicht auf eine Ausführungsform einer erfindungsgemäßen Schweißeinrichtung 1 bei einem Schweißvorgang, wobei der Schweißbrenner 2 einen Richtungswechsel von 90° (vgl. Fig. 1) bzw. 180°C durchläuft (vgl. Fig. 2).

Die Schweißeinrichtung 1 gemäß Figuren 1 und 2 weist zum Durchführen des Schweißvorgangs einen Schweißbrenner 2 auf, der dazu ausgebildet ist, einen Lichtbogen zu erzeugen, so dass z. B. ein Schweißzusatz bzw. eine Oberfläche eines zu fertigenden Werkstücks aufschmelzbar ist, um z. B. im Rahmen eines WAAM-Verfahrens das Werkstück Lage um Lage aufzubauen.

Um hierbei das Werkstück während des Schweißvorgangs gezielt kühlen zu können, weist die Schweißeinrichtung 1 eine am Schweißbrenner 2 angeordnete Düsenvorrichtung 20 auf, die ein Kühldüsenarray 21 aufweist, das zumindest eine Reihe 22 von Kühldüsen 23 aufweist, wobei die jeweilige Kühldüse 23 zum Kühlen des Werkstücks mit einem einstellbaren Volumenstrom eines Kühlmediums 4 beaufschlagbar ist.

Das Kühldüsenarray 21 ist gemäß Figuren 1 und 2 um eine Rotationsachse R rotierbar, so dass insbesondere die Kühldüsen 23 um den Schweißbrenner 2 herum bewegbar sind. In den Figuren 1 und 2 steht die Rotationsachse senkrecht auf der Blattebene.

Somit kann z.B. bei einem Richtungswechsel des Schweißbrenners 2 um 90°, wie es in der Figur 1 gezeigt ist, durch Rotation des Kühldüsenarrays um die Rotationsachse R die Kühlposition 230, d.h., der Oberflächenbereich 230 des Werkstücks, der mit einem Kühlmedium 4 beaufschlagt wird, an den Richtungswechsel angepasst werden, idealerweise so, dass die Kühlposition in Bewegungsrichtung B des Schweißbrenners 2 hinter dem momentanen Schweißbad liegt, das mittels des Lichtbogens des Schweißbrenners erzeugt wird. Figur 2 zeigt die Anpassung der Kühlposition 230 bei einem Richtungswechsel des Schweißbrenners 2 um 180°.

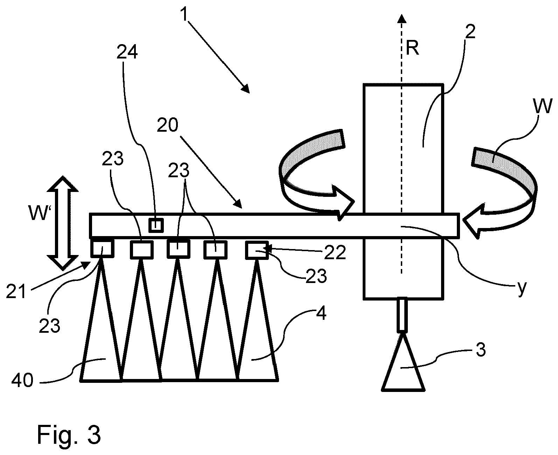

Die in den Figuren 1 und 2 gezeigte Schweißeinrichtung 1 kann z.B. gemäß Figur 3 ausgebildet sein. Hierbei weist das Kühldüsenarray 21 zumindest eine Reihe 22 an Kühldüsen 23 auf, wobei die Kühldüsen 23 unterschiedliche Abstände zu dem Lichtbogen 3 des Schweißbrenners aufweisen. Das Kühldüsenarray 21 ist um eine Rotationachse R schwenkbar wobei der Rotationswinkel W mittels eines geeigneten Aktuators, der die Rotation des Kühldüsenarrays 21 bewirkt, einstellbar ist. Zusätzlich kann das Kühldüsenarray um eine Kippachse y, hier z.B. eine horizontale Kippachse y gekippt bzw. verschwenkt werden. Durch die einzelnen Kühldüsen 23 kann ein bestimmtes Kühlmedium 4 mit jeweils variablen Volumenstrom ausgegeben werden. Über die Kühldüsen 23 können auch unterschiedliche Kühlmedien 4, 40 ausgeben werden. Weiterhin kann der Rotationswinkel W des Kühldüsenarrays 21 bezüglich der Rotationsachse R und/oder ein Kippwinkel W' bezüglich der Kippachse y anhand eines Temperatursignals eingestellt werden, das z.B. durch einen Temperatursensor 24 bereitgestellt werden kann. Weiterhin kann das Temperatursignal zum Einstellen der Volumenströme des bzw. der Kühlmedien 4, 40 verwendet werden.

Bei dem bzw. den Kühlmedien kann es sich jeweils um eines der folgenden Kühlmedien handeln: Argon, Helium, Stickstoff, Wasserstoff, Luft, Kohlendioxid, ein Gemisch einer Auswahl der vorgenannten Gase.

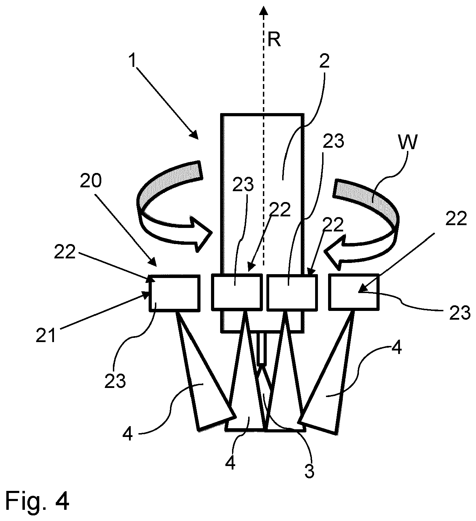

Wie weiterhin in der Figur 4 gezeigt ist, weist das Kühldüsenarray 21 der Schweißeinrichtung 1 gemäß Figur 3 mehrere Reihen 22 an Kühldüsen 23 auf, wobei z.B. die Möglichkeit besteht, die Kühlmittelströme 4 der Kühldüsen der äußersten Reihen 22 nach innen hin auszurichten, um die Kühlleistung auf den durch den Schweißbrenner 2 abgefahrenen Pfad zu konzentrieren.

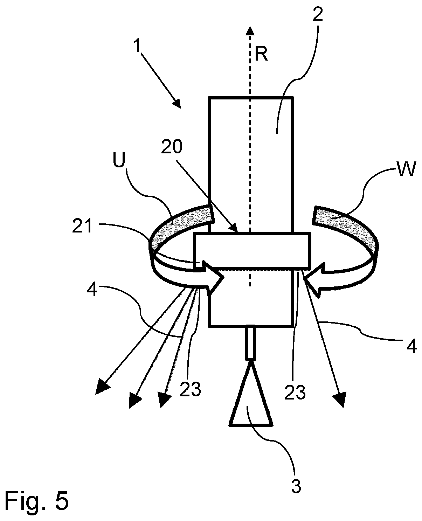

Figur 5 zeigt eine weitere Ausführungsform einer nicht-erfindungsgemäßer Schweißeinrichtung 1, wobei hier im Unterschied zu den Figuren 3 und 4 die Kühldüsen 23 in einer Umfangsrichtung U des Schweißbrenners 2 ringförmig um den Schweißbrenner 2 herum angeordnet sind und zwar vorzugsweise äquidistant zueinander, so dass das Kühldüsenarray 21 ringförmig um den Schweißbrenner 2 herum verläuft.

## Patentansprüche

1. Schweißeinrichtung (1) zum Schweißen zumindest eines Werkstücks, mit:
- einem Schweißbrenner (2), der dazu ausgebildet ist, einen Lichtbogen (3) zum Schweißen des mindestens eines Werkstücks zu erzeugen,
- einer am Schweißbrenner (2) angeordneten Düsenvorrichtung (20), die ein Kühldüsenarray (21) aufweist, wobei das Kühldüsenarray (21) zumindest eine radiale Reihe von Kühldüsen aufweist und auf der Reihe mindestens zwei Kühldüsen angeordnet sind, wobei die jeweilige Kühldüse (23) zum Kühlen des Werkstücks mit einem einstellbaren Volumenstrom eines Kühlmediums (4) beaufschlagbar ist, **dadurch gekennzeichnet, dass** das Kühldüsenarray (21) um eine Rotationsachse (R) rotierbar ist, so dass die Kühldüsen (23) um den Schweißbrenner (2) herum bewegbar sind, wobei dass das Kühldüsenarray (21) mehreren Reihen (22) von Kühldüsen (23) aufweist und Kühldüsen (23) der Düsenvorrichtung (20) in einer Umfangsrichtung (U) des Schweißbrenners (2) nebeneinander angeordnet sind, vorzugsweise äquidistant, so dass das Kühldüsenarray (21) ringförmig um den Schweißbrenner (2) herum verläuft.

2. Schweißeinrichtung nach einem der vorhergehenden Ansprüche, **dadurch gekennzeichnet, dass** mehrere Kühldüsen (23) des Kühldüsenarrays (21) mit einem einstellbaren Volumenstrom eines bestimmten Kühlmediums (4) beaufschlagbar sind.

3. Schweißeinrichtung nach einem der vorhergehenden Ansprüche, **dadurch gekennzeichnet, dass** zumindest eine Kühldüse (23) mit einem ersten Kühlmedium (4) und zumindest eine weitere Kühldüse mit einem zweiten Kühlmedium (40) beaufschlagbar ist, wobei das zweite Kühlmedium (40) sich in seiner Zusammensetzung vom ersten Kühlmedium (4) unterscheidet.

4. Schweißeinrichtung einem der vorhergehenden Ansprüche, **dadurch gekennzeichnet, dass** die Schweißeinrichtung (1) dazu ausgebildet ist, einen Rotationswinkel (W) des Kühldüsenarrays (21) bezüglich der Rotationsachse (R) anhand eines Temperatursignals einzustellen und/oder anhand einer automatischen Kalkulation basierend auf einem bekannten Bewegungsablauf des Schweißbrenners (2) während des Schweißvorgangs.

5. Schweißeinrichtung nach einem der vorhergehenden Ansprüche, **dadurch gekennzeichnet, dass** das Kühldüsenarray (21) um eine Kippachse (y), insbesondere eine horizontale Kippachse, kippbar ist.

6. Schweißeinrichtung nach einem der vorhergehenden Ansprüche, **dadurch gekennzeichnet, dass** die Schweißeinrichtung (1) zumindest einen Temperatursensor (24) aufweist, der dazu konfiguriert ist, eine Temperaturverteilung eines mittels der Schweißeinrichtung (1) erzeugten Werkstücks zu erfassen.

7. Schweißeinrichtung nach Anspruch 6, **dadurch gekennzeichnet, dass** die Schweißeinrichtung (1) dazu ausgebildet ist, anhand der erfassten Temperaturverteilung einen Volumenstrom eines durch die jeweilige Kühldüse (23) ausgegebenen Kühlmediums (4, 40) zu steuern.

8. Schweißeinrichtung nach einem der vorhergehenden Ansprüche, **dadurch gekennzeichnet, dass** die jeweilige Kühldüse (23) über ein Gewinde an der Düsenvorrichtung (20) festgelegt ist.

9. Schweißeinrichtung nach einem der vorhergehenden Ansprüche, **dadurch gekennzeichnet, dass** die Schweißeinrichtung (1) dazu ausgebildet ist, eine Kühldüse (23) des Kühldüsenarrays (21), die sich näher am Lichtbogen (3) befindet als eine weitere Kühldüse (23), mit einem geringeren Volumenstrom eines Kühlmediums (4) zu beaufschlagen als die weitere Kühldüse (23), um das Risiko einer Wechselwirkung des Kühlmediums (4) mit einem Prozessgas des Schweißvorganges zu senken.

10. Schweißeinrichtung nach einem der vorhergehenden Ansprüche, **dadurch gekennzeichnet, dass** die Schweißeinrichtung (1) dazu ausgebildet ist, als Kühlmedium (4, 40) eines der folgenden Medium über zumindest eine Kühldüse (23) auszugeben: Argon, Helium, Stickstoff, Wasserstoff, Luft, Kohlendioxid, ein Gemisch einer Auswahl der vorgenannten Gase.

11. Verfahren zum Schweißen zumindest eines Werkstücks, wobei das Werkstück lagenweise mittels einer Schweißeinrichtung (1) nach einem der vorhergehenden Ansprüche aufgebaut und mittels der Düsenvorrichtung (20) gekühlt wird.

## Claims

1. Welding device (1) for welding at least one workpiece, comprising:
- a welding torch (2), which is designed to create an electric arc (3) for welding the at least one workpiece,
- a nozzle apparatus (20) arranged on the welding torch (2), which apparatus comprises a cooling nozzle array (21), the cooling nozzle array (21) having at least one radial row of cooling nozzles and at least two cooling nozzles being arranged on the row, it being possible to supply the relevant cooling nozzle (23) with an adjustable volume flow of a cooling medium (4) for cooling the workpiece, **characterized in that** the cooling nozzle array (21) is rotatable about a rotational axis (R) such that the cooling nozzles (23) are movable around the welding torch (2), **in that** the cooling nozzle array (21) comprising a plurality of rows (22) of cooling nozzles (23) and cooling nozzles (23) of the nozzle apparatus (20) being arranged next to one another in a circumferential direction (U) of the welding torch (2), preferably equidistantly, such that the cooling nozzle array (21) extends in a ring shape around the welding torch (2).

2. Welding device according to any of the preceding claims,
**characterized in that** a plurality of cooling nozzles (23) of the cooling nozzle array (21) can be supplied with an adjustable volume flow of a particular cooling medium (4).

3. Welding device according to any of the preceding claims,
**characterized in that** at least one cooling nozzle (23) can be supplied with a first cooling medium (4) and at least one further cooling nozzle can be supplied with a second cooling medium (40), the second cooling medium (40) differing from the first cooling medium (4) in its composition.

4. Welding device according to any of the preceding claims,
**characterized in that** the welding device (1) is designed to adjust a rotation angle (W) of the cooling nozzle array (21) with respect to the rotational axis (R) on the basis of a temperature signal and/or on the basis of an automatic calculation based on a known movement sequence of the welding torch (2) during the welding process.

5. Welding device according to any of the preceding claims,
**characterized in that** the cooling nozzle array (21) can be tilted about a tilting axis (y), in particular a horizontal tilting axis.

6. Welding device according to any of the preceding claims,
**characterized in that** the welding device (1) comprises at least one temperature sensor (24) which is configured to detect a temperature distribution of a workpiece produced by means of the welding device (1).

7. Welding device according to claim 6, **characterized in that** the welding device (1) is designed to control, on the basis of the detected temperature distribution, a volume flow of a cooling medium (4, 40) discharged through the relevant cooling nozzle (23).

8. Welding device according to any of the preceding claims,
**characterized in that** the relevant cooling nozzle (23) is fixed to the nozzle apparatus (20) via a thread.

9. Welding device according to any of the preceding claims,
**characterized in that** the welding device (1) is designed to supply a cooling nozzle (23) of the cooling nozzle array (21) that is closer to the electric arc (3) than a further cooling nozzle (23) with a lower volume flow of a cooling medium (4) than the further cooling nozzle (23) in order to reduce the risk of interaction of the cooling medium (4) with a process gas of the welding process.

10. Welding device according to any of the preceding claims,
**characterized in that** the welding device (1) is designed to discharge one of the following media as a cooling medium (4, 40) via at least one cooling nozzle (23): argon, helium, nitrogen, hydrogen, air, carbon dioxide, or a mixture of a selection of the aforementioned gases.

11. Method for welding at least one workpiece, wherein the workpiece is constructed in layers by means of a welding device (1) according to any of the preceding claims and is cooled by means of the nozzle apparatus (20).

## Revendications

1. Appareil de soudage (1) pour le soudage d'au moins une pièce, comportant :
- un chalumeau de soudage (2) configuré pour générer un arc électrique (3) pour le soudage de l'au moins une pièce,
- un dispositif à buses (20) disposé sur le chalumeau de soudage (2) et présentant un
réseau de buses de refroidissement (21), dans lequel le réseau de buses de refroidissement (21) présente au moins une rangée radiale de buses de refroidissement et au moins deux buses de refroidissement sont disposées sur la rangée, dans lequel la buse de refroidissement (23) respective peut être alimentée par un débit volumétrique réglable d'un milieu de refroidissement (4) pour le refroidissement de la pièce, **caractérisé en ce que** le réseau de buses de refroidissement (21) peut tourner autour d'un axe de rotation (R) de sorte que les buses de refroidissement (23) peuvent se déplacer autour du chalumeau de soudage (2), dans lequel **en ce que** le réseau de buses de refroidissement (21) présente plusieurs rangées (22) de buses de refroidissement (23) et des buses de refroidissement (23) du dispositif à buses (20) sont disposées les unes à côté des autres, de préférence de manière équidistante, dans une direction circonférentielle (U) du chalumeau de soudage (2) de sorte que le réseau de buses de refroidissement (21) s'étend en forme d'anneau autour du chalumeau de soudage (2).

2. Appareil de soudage selon l'une des revendications précédentes, **caractérisé en ce que** plusieurs buses de refroidissement (23) du réseau de buses de refroidissement (21) peuvent être alimentées par un débit volumétrique réglable d'un milieu de refroidissement (4) déterminé.

3. Appareil de soudage selon l'une des revendications précédentes, **caractérisé en ce qu'**au moins une buse de refroidissement (23) peut être alimentée par un premier milieu de refroidissement (4) et au moins une autre buse de refroidissement peut être alimentée par un second milieu de refroidissement (40), dans lequel le second milieu de refroidissement (40) se distingue du premier milieu de refroidissement (4) par sa composition.

4. Appareil de soudage selon l'une des revendications précédentes, **caractérisé en ce que** l'appareil de soudage (1) est configuré pour régler un angle de rotation (W) du réseau de buses de refroidissement (21) par rapport à l'axe de rotation (R) à l'aide d'un signal de température et/ou à l'aide d'un calcul automatique basé sur une séquence de déplacements connue du chalumeau de soudage (2) pendant le processus de soudage.

5. Appareil de soudage selon l'une des revendications précédentes, **caractérisé en ce que** le réseau de buses de refroidissement (21) peut être basculé autour d'un axe de basculement (y), en particulier d'un axe de basculement horizontal.

6. Appareil de soudage selon l'une des revendications précédentes, **caractérisé en ce que** l'appareil de soudage (1) présente au moins un capteur de température (24) configuré pour détecter une distribution de température d'une pièce générée au moyen de l'appareil de soudage (1).

7. Appareil de soudage selon la revendication 6, **caractérisé en ce que** l'appareil de soudage (1) est configuré pour commander, à l'aide de la distribution de température détectée, un débit volumétrique d'un milieu de refroidissement (4, 40) délivré par la buse de refroidissement (23) respective.

8. Appareil de soudage selon l'une des revendications précédentes, **caractérisé en ce que** la buse de refroidissement (23) respective est fixée au dispositif à buses (20) par l'intermédiaire d'un filetage.

9. Appareil de soudage selon l'une des revendications précédentes, **caractérisé en ce que** l'appareil de soudage (1) est configuré pour alimenter une buse de refroidissement (23) du réseau de buses de refroidissement (21), laquelle se trouve plus près de l'arc électrique (3) qu'une autre buse de refroidissement (23), par un débit volumétrique d'un milieu de refroidissement (4) plus faible que l'autre buse de refroidissement (23), afin de réduire le risque d'une interaction du milieu de refroidissement (4) avec un gaz de processus du processus de soudage.

10. Appareil de soudage selon l'une des revendications précédentes, **caractérisé en ce que** l'appareil de soudage (1) est configuré pour délivrer l'un des milieux suivants comme milieu de refroidissement (4, 40) par l'intermédiaire d'au moins une buse de refroidissement (23) : argon, hélium, azote, hydrogène, air, dioxyde de carbone, un mélange d'une sélection des gaz susmentionnés.

11. Procédé pour le soudage d'au moins une pièce, dans lequel la pièce est assemblée par couches au moyen d'un appareil de soudage (1) selon l'une des revendications précédentes et est refroidie au moyen du dispositif à buses (20).
